(19) Europäisches Patentamt
European Patent Office
Office européen des brevets

(11) EP 4 492 043 A1

(12) **EUROPEAN PATENT APPLICATION**
published in accordance with Art. 153(4) EPC

(43) Date of publication:
**15.01.2025 Bulletin 2025/03**

(21) Application number: **23766641.7**

(22) Date of filing: **28.02.2023**

(51) International Patent Classification (IPC):
**G01N 21/64** (2006.01)

(52) Cooperative Patent Classification (CPC):
**G01N 21/64**

(86) International application number:
**PCT/JP2023/007273**

(87) International publication number:
**WO 2023/171463 (14.09.2023 Gazette 2023/37)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **10.03.2022 JP 2022037120**

(71) Applicant: **Sony Group Corporation
Tokyo 108-0075 (JP)**

(72) Inventors:
• **FUTAMURA Koji
Tokyo 108-0075 (JP)**
• **HIGUCHI Akihide
Tokyo 108-0075 (JP)**
• **OTSUKA Fumitaka
Tokyo 108-0075 (JP)**

(74) Representative: **D Young & Co LLP
3 Noble Street
London EC2V 7BQ (GB)**

(54) **INFORMATION PROCESSING DEVICE AND INFORMATION PROCESSING SYSTEM**

(57)    An object of the present disclosure is to provide a technique for appropriately grasping the state of a fluorescent reagent. The present disclosure provides an information processing device including a processing unit configured to detect a change in single stain spectrum information of a fluorochrome. The processing unit may compare first single stain spectrum information of the fluorochrome with second single stain spectrum information of the fluorochrome, and determine whether single stain spectrum information changes on the basis of the comparison. The first single stain spectrum information and the second single stain spectrum information may be single stain spectrum information related to the same fluorochrome, and may be acquired at different time points. The single stain spectrum information may be fluorescence intensity spectrum data of fluorescence generated by irradiating the fluorochrome with light.

*FIG. 1*

# EP 4 492 043 A1

**Description**

TECHNICAL FIELD

The present disclosure relates to an information processing device and an information processing system. More specifically, the present disclosure relates to an information processing device and an information processing system, in which processing is executed on spectrum data of a fluorochrome.

BACKGROUND ART

For example, a particle population such as cells, microorganisms, and liposomes is labeled with a fluorochrome, and the intensity and/or pattern of fluorescence generated from the fluorochrome excited by irradiating each particle of the particle population with laser light is measured, thereby measuring the characteristics of the particles. As a representative example of a particle analyzer that performs the measurement, a flow cytometer can be mentioned.

The flow cytometer is a device that irradiates particles flowing in a line in a flow path with laser light (excitation light) having a specific wavelength and detects fluorescence and/or scattered light emitted from each particle to analyze a plurality of particles one by one. The flow cytometer can convert light detected by a photodetector into an electrical signal, quantify the electrical signal, and perform statistical analysis to determine characteristics, for example, the type, size, structure, and the like of each particle.

A combination of one or more fluorochrome-labeled antibodies is used to perform the analysis by the flow cytometer. The design of the combination is also referred to as a panel design. Various techniques have been proposed for the panel design.

For example, Patent Document 1 below discloses a reagent selection support apparatus for supporting selection of a reagent used for cell measurement. The reagent selection support apparatus includes an acquisition unit that acquires order information including a plurality of measurement items, a processing unit that determines a combination of a first fluorescent reagent used to measure a first target molecule corresponding to the plurality of measurement items and a second fluorescent reagent used to measure a second target molecule corresponding to a second measurement item different from the first measurement item on the basis of information reflecting the characteristics of the first target molecule and the characteristics of a first fluorochrome included in the first fluorochrome and information reflecting the characteristics of the second target molecule and the characteristics of a second fluorochrome included in the second fluorochrome, and an output unit that outputs the determined combination of the first fluorescent reagent and the second fluorescent reagent.

Furthermore, several techniques have been proposed for a method for correcting a measurement result of the flow cytometer. One of the correction methods is unmixing processing.

As one of the correction methods, for example, Patent Document 2 below discloses a fluorescence intensity correction method including a procedure in which fluorescence generated from a fluorochrome excited by irradiating microparticles multiply labeled with a plurality of fluorochromes having overlapping fluorescence wavelength bands with light is received by photodetectors having different light reception wavelength bands, the photodetectors being disposed in a larger number than the number of fluorochromes, and a measurement spectrum obtained by collecting detection values from the photodetectors is approximated by a linear sum of single stain spectra obtained by microparticles individually labeled with the respective fluorochromes.

CITATION LIST

PATENT DOCUMENT

Patent Document 1: Japanese Patent Application Laid-Open No. 2019-203842
Patent Document 2: Japanese Patent Application Laid-Open No. 2011-232259

SUMMARY OF THE INVENTION

PROBLEMS TO BE SOLVED BY THE INVENTION

The state of the fluorescent reagent may change with time depending on storage conditions (for example, light, oxidation, temperature, and the like). Therefore, master data stored as spectrum information of each fluorescent reagent or spectrum information acquired in the past may not reflect the current state of the fluorescent reagent. The use of spectrum information that does not reflect the current state of the fluorescent reagent may prevent the execution of an accurate panel design or unmixing processing. Among the fluorescent reagents, in particular, a tandem reagent may have different spectrum information even in the same lot in the case of being stored in different bottles. Therefore, in particular, for the tandem reagent, master data or spectrum information acquired in the past may not be suitable for being used as the current fluorescent reagent. Furthermore, when the fluorescent reagent deteriorates, the held fluorescent reagent may not be used.

As described above, in analysis using the fluorescent reagent in flow cytometry, it is desirable to appropriately grasp the state of the fluorescent reagent to be used. Therefore, an object of the present disclosure is to provide a technique for appropriately grasping the state of a fluorescent reagent.

SOLUTIONS TO PROBLEMS

The present disclosure provides an information processing device including a processing unit configured to detect a change in single stain spectrum information of a fluorochrome.

The processing unit may compare first single stain spectrum information of the fluorochrome with second single stain spectrum information of the fluorochrome, and determine whether single stain spectrum information changes on the basis of the comparison. The first single stain spectrum information and the second single stain spectrum information may be single stain spectrum information related to the same fluorochrome, and may be acquired at different time points.

The single stain spectrum information may be fluorescence intensity spectrum data of fluorescence generated by irradiating the fluorochrome with light.

The single stain spectrum information may be spectrum data represented by fluorescence intensity at each wavelength in a predetermined wavelength range.

The processing unit may acquire change amount data indicating a change between the first single stain spectrum information of the fluorochrome and the second single stain spectrum information of the fluorochrome, and then determine whether the single stain spectrum information changes on the basis of the comparison based on the change amount data.

In a case where the change amount data is equal to or more than a predetermined threshold value, or more than the predetermined threshold value, the processing unit may determine that the single stain spectrum information changes.

The processing unit may generate information regarding the change when it is determined that the single stain spectrum information changes.

The information regarding the change may include an alert indicating that the single stain spectrum information changes.

The information regarding the change may include information for specifying a fluorochrome for which the single stain spectrum information changes.

The information regarding the change may include single stain spectrum graph data of a fluorochrome for which the single stain spectrum information changes.

The processing unit may output a screen including a display prompting to select whether to update the single stain spectrum information.

The processing unit may be configured to execute panel design processing by using the updated single stain spectrum information.

The processing unit may be configured to execute unmixing processing by using the updated single stain spectrum information.

Furthermore, the present disclosure also provides an information processing system including a processing unit configured to detect a change in single stain spectrum information of a fluorochrome.

The information processing system may further include:

an information processing device including the processing unit; and
a biological sample analyzer.

The biological sample analyzer may execute analysis processing using the fluorochrome.

The biological sample analyzer may be configured to transmit, to the information processing device, a single stain spectrum of the fluorochrome, the single stain spectrum being obtained by the analysis processing.

BRIEF DESCRIPTION OF DRAWINGS

Fig. 1 is a diagram illustrating a configuration example of an information processing device according to the present disclosure.

Fig. 2 is a flowchart of an example of processing executed by an information processing device according to the present disclosure.

Fig. 3 is a diagram illustrating a schematic example of fluorescence spectrum plot data.

Fig. 4A is a diagram illustrating an example of a screen including information regarding a change.

Fig. 4B is a diagram illustrating another example of a screen including information regarding a change.

Fig. 4C is a diagram illustrating still another example of a screen including information regarding a change.

Fig. 5A is a diagram illustrating an example of a screen prompting update of single stain spectrum information.

Fig. 5B is a diagram illustrating another example of a screen prompting update of single stain spectrum information.

Fig. 5C is a diagram illustrating still another example of a screen prompting update of single stain spectrum information.

Fig. 6 is a diagram illustrating a configuration example of a biological sample analyzer.

Fig. 7 is a diagram illustrating a configuration example of an information processing system according to the present disclosure.

## MODE FOR CARRYING OUT THE INVENTION

Hereinafter, preferred modes for carrying out the present disclosure will be described. Note that embodiments to be described below illustrate representative embodiments of the present disclosure, and the scope of the present disclosure is not limited only to these embodiments. Note that the present disclosure will be described in the following order.

1. First Embodiment (Information Processing Device)

(1) Overview of Present Disclosure
(2) Configuration Example of Information Processing Device
(3) Example of Processing Executed by Processing Unit
(4) Configuration Example of Biological Sample Analyzer
(5) Example of Processing Using Single Stain Spectrum Information

2. Second Embodiment (Information Processing System)
3. Third Embodiment (Information Processing Method)
4. Fourth embodiment (program)

1. First Embodiment (Information Processing Device)

(1) Overview of Present Disclosure

The present disclosure provides an information processing device including a processing unit configured to detect a change in single stain spectrum information of a fluorochrome. By detecting a change in single stain spectrum information, for example, it is possible to prompt a user to select appropriate single stain spectrum information.

The fluorochrome may be a fluorochrome constituting a fluorochrome-labeled antibody. The fluorochrome-labeled antibody may be a fluorochrome-labeled antibody used for staining particles (in particular, biological particles, such as cells or liposomes). That is, the processing unit may be configured to detect a change in single stain spectrum information of the fluorochrome-labeled antibody.

The change may be, for example, a change in single stain spectrum information of one or more specific fluorochromes, and may be particularly a change with time. As described above, fluorescence emitted from the fluorochrome may change with time. According to the present disclosure, a change in single stain spectrum information with time can be specified, and thus more appropriate panel design processing or fluorescence correction processing (in particular, unmixing processing) can be executed.

According to the present disclosure, appropriate single stain spectrum information can be used in various processing. The use of appropriate single stain spectrum information enables, for example, appropriate panel design processing or appropriate unmixing processing.

Furthermore, the processing unit can also prompt the user to select an optimal single stain spectrum for each fluorescent reagent according to the detection of the change. This contributes to more accurate unmixing processing or panel design processing.

Furthermore, it is also possible to evaluate a change in fluorescence-labeling reagent by detecting the change in single stain spectrum information.

Hereinafter, first, a configuration example of an information processing device according to the present disclosure will be described, and next, an example of processing executed by the information processing device will be described.

(2) Configuration Example of Information Processing Device

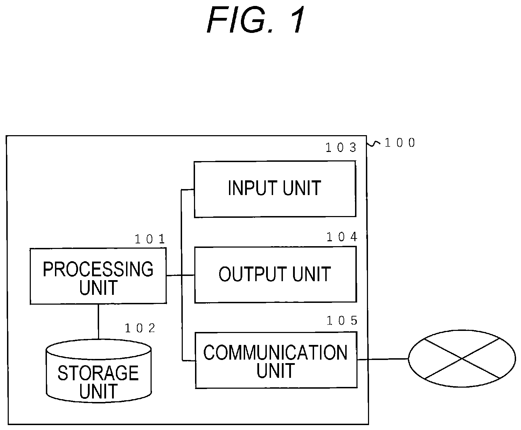

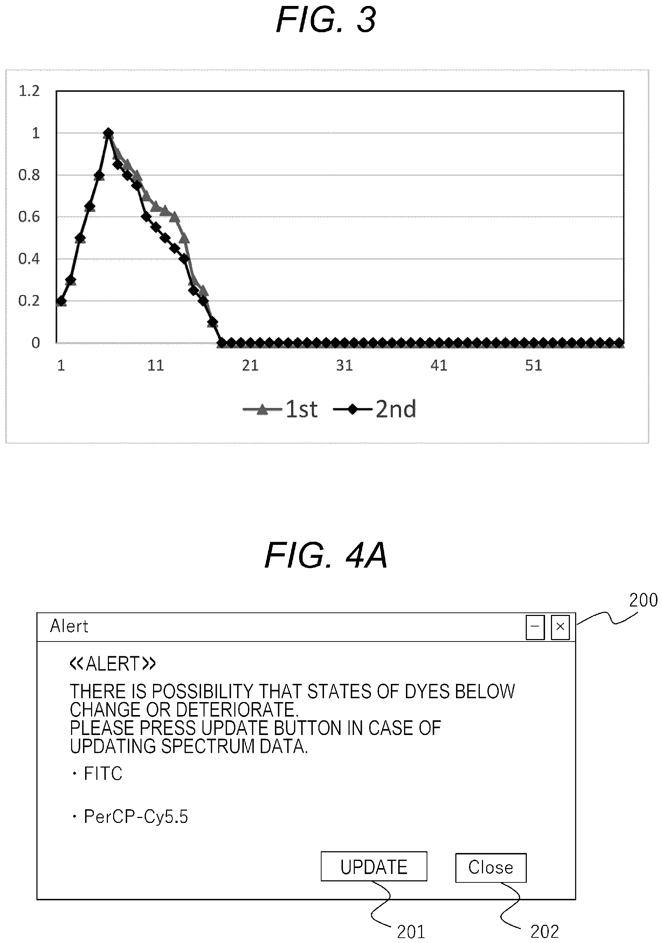

An example of the information processing device according to the present disclosure will be described with reference to Fig. 1. Fig. 3 is a block diagram of the information processing device. An information processing device 100 illustrated in Fig. 3 can include a processing unit 101, a storage unit 102, an input unit 103, an output unit 104, and a communication unit 105. The information processing device 100 may be configured as, for example, a so-called computer, may be a desktop computer, a laptop computer, or a tablet computer, or may be a server computer.

The processing unit 101 may be configured to detect a change in single stain spectrum information of a fluorescently labeled antibody. The specific processing of detection will be described in detail below. The processing unit 101 may include, for example, a central processing unit (CPU) and a RAM. The CPU and the RAM may be connected to each other via, for example, a bus. An input/output interface may be further connected to the bus. The input unit 103, the output unit 104, and the communication unit 105 may be connected to the bus via the input/output interface.

The storage unit 102 stores various data. The storage unit 102 may be configured to be able to store, for example, data acquired in the processing to be described later (for example, first and second single stain spectrum information, information regarding a change, and the like) and/or data generated in the processing to be described later (for example, first and second single stain spectrum information, information regarding a change, and the like), and may include, for example, an information recording medium. Examples of these pieces of data include various kinds of data (for example, the single stain spectrum information, and the like) received by the input unit 103, various kinds of data (for example, the single stain spectrum information, and the like) received via the communication unit 105, and various kinds of data (for example, the single stain spectrum information and information regarding a change) generated by the processing unit 101, but are not limited to these kinds of data. Furthermore, the storage unit 102 can store an operating system (for example, Windows (registered trademark), UNIX (registered trademark), Linux (registered trademark), or the like), a program for causing the information processing device or the information processing system to execute the information processing method according to the present disclosure, and various other programs.

The single stain spectrum information (first single stain spectrum information and second single stain spectrum information) stored in the storage unit 102 may be associated with data related a date and time when the single stain spectrum information is acquired (in particular, data specifying the date and time when the analysis processing for acquiring the single stain spectrum information is executed), or may include the date and time data. This enables time-series management for single stain spectrum information. Furthermore, it is also possible to specify the date and time when the state of the fluorochrome is analyzed.

The input unit 103 may include an interface configured to be able to receive inputs of various kinds of data. For example, the input unit 103 may be configured to be able to receive various kinds of data input in processing to be described later. The input unit 103 may include, for example, a mouse, a keyboard, and a touch panel, as a device that receives such an operation.

The output unit 104 may include an interface configured to be able to output various kinds of data. For example, the output unit 104 may be configured to be able to output various kinds of data generated in processing to be described later. Examples of the data include various kinds of data generated by the processing unit 101, but the data is not limited to these pieces of data. The output unit 104 may include, for example, a display device as a device that outputs these pieces of data.

The communication unit 105 may be configured to connect the information processing device 100 to a network in a wired or wireless manner. By the communication unit 105, the information processing device 100 can acquire various kinds of data via a network. The acquired data can be stored in, for example, the storage unit 102. The configuration of the communication unit 105 may be appropriately selected by those skilled in the art.

The information processing device 100 may include, for example, a drive (not illustrated) or the like. The drive can read data (for example, the various kinds of data described above) or a program (for example, the program described above) recorded in the recording medium and output the read data or program to the RAM. The recording medium is, for example, a microSD memory card, an SD memory card, or a flash memory, but is not limited to these.

(3) Example of Processing Executed by Processing Unit

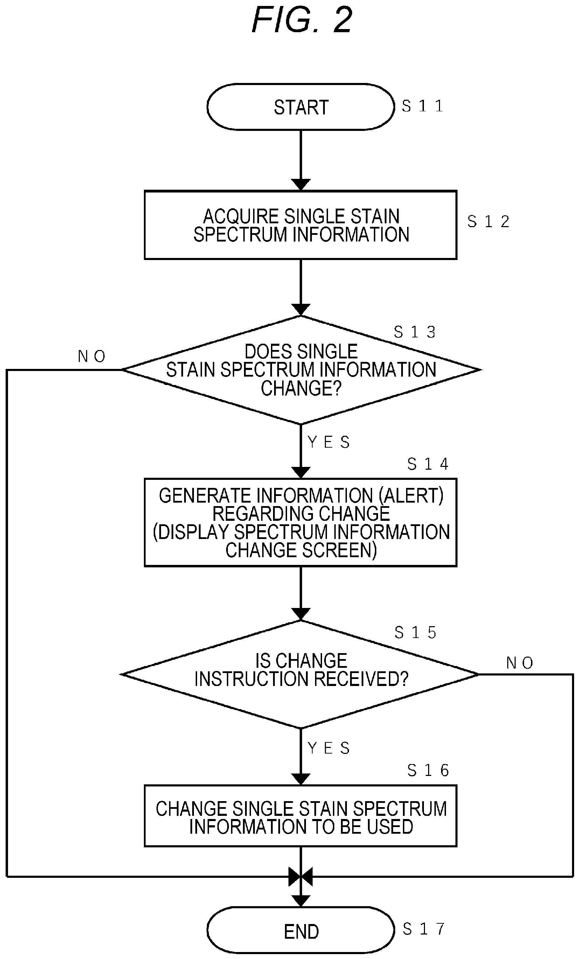

Hereinafter, an example of the processing executed by the information processing device according to the present disclosure will be described with reference to Fig. 2. Fig. 2 is a flowchart of the processing example.

(Step S11)

In step S11, the information processing device 100 (in particular, the processing unit 101) starts processing of detecting a change in single stain spectrum information.

The processing may be performed before the start of the panel design processing, during the panel design processing, or after the panel design processing as will be described later.

Alternatively, the processing may be performed, for example, before the start of analysis processing by a biological sample analyzer such as a flow cytometer, during analysis processing, or after the end of analysis processing.

(Step S12)

In step S12, the information processing device 100 acquires single stain spectrum information of the fluorochrome-labeled antibody. For example, the biological sample analyzer such as a flow cytometer acquires single stain spectrum information by performing analysis processing on a sample (in particular, a single-stained sample) stained with a fluorochrome-labeled antibody. The information processing device 100 acquires the single stain spectrum information from the biological sample analyzer. A configuration example of the biological sample analyzer and the analysis processing of the biological sample analyzer will be described in (4) below.

The single stain spectrum information may be fluorescence intensity spectrum data of fluorescence generated by irradiating particles labeled with a single fluorochrome (in particular, particles labeled with a single fluorochrome-labeled antibody) with excitation light. That is, the single stain spectrum information may be data indicating the fluorescence distribution of the fluorochrome, and more specifically, may be spectrum data represented by fluorescence intensity at each wavelength in a predetermined wavelength range. The fluorescence may be, for example, fluorescence detected by a photodetector. The fluorescence intensity spectrum data may be, for example, spectrum data generated by combining pieces of fluorescence intensity data acquired by a plurality of photodetectors having different light reception wavelength bands.

For example, as described above, the single stain spectrum information acquired in step S12 may be used as fluorescence intensity spectrum data indicating the current state of the fluorochrome-labeled antibody, that is, may mean the fluorescence intensity spectrum data indicating the current state of the fluorochrome-labeled antibody possessed by the user. In the present description, the single stain spectrum information is also referred to as "second single stain spectrum information".

In step S12, the information processing device 100 can also acquire reference single stain spectrum information of the fluorochrome-labeled antibody from which the single stain spectrum information is derived. In the present description, the reference single stain spectrum information is also referred to as "first single stain spectrum information".

Note that the information processing device 100 may hold the reference single stain spectrum information in advance prior to step S12.

That is, the first single stain spectrum information and the second single stain spectrum information correspond to single stain spectrum information related to the same fluorochrome, but may be acquired at different time points.

The information processing device 100 may acquire the first single stain spectrum information on the basis of fluorochrome identification information or fluorochrome-labeled antibody identification information (or fluorochrome identification information or fluorochrome-labeled antibody identification information associated with the second single stain spectrum information) included in the second single stain spectrum information.

The fluorochrome identification information is information for specifying a fluorochrome from which the second single stain spectrum information is derived, and may be, for example, a name of the fluorochrome or a number (for example, a product number) for specifying the fluorochrome.

Furthermore, the fluorochrome-labeled antibody identification information is information for specifying a fluorochrome-labeled antibody from which the second single stain spectrum information is derived, and may be, for example, a name of the fluorochrome-labeled antibody or a number (for example, a product number) for specifying the fluorochrome-labeled antibody.

The information processing device 100 can acquire a first single stain spectrum (reference single stain spectrum) of the fluorochrome or the fluorochrome-labeled antibody specified with each identification information by using such identification information. Thus, the information processing device 100 can automatically acquire the first single stain spectrum, for example, and can reduce time and effort for the user to select the first single stain spectrum.

The first single stain spectrum information is acquired by the analysis processing on a sample stained with the same fluorochrome (in particular, a fluorochrome-labeled antibody) as a fluorochrome (in particular, a fluorochrome-labeled antibody) staining a sample used for acquiring the second single stain spectrum information.

Preferably, the first single stain spectrum information and the second single stain spectrum information are obtained by performing the analysis processing on a sample containing the same particles (for example, the same kind of cells) stained with the same fluorochrome (in particular, a fluorochrome-labeled antibody), but may be obtained by performing the analysis processing on a sample containing different particles (for example, different kinds of cells) stained with the same fluorochrome (in particular, a fluorochrome-labeled antibody).

Furthermore, preferably, the same kind of the cells may be cells obtained by the same processing procedure, or may be cells obtained by different processing procedures. Furthermore, the analysis processing for obtaining the first single stain spectrum information and the analysis processing for obtaining the second single stain spectrum information are preferably the same, but may be different. The difference between the processing procedure and the analysis processing can be compensated by appropriately adjusting the acquired data.

Furthermore, the first single stain spectrum information and the second single stain spectrum information may have the different time points when the analysis processing for obtaining each single stain spectrum information is executed.

For example, the first single stain spectrum information may be data acquired earlier than the second single stain spectrum information. As a more specific example, the first single stain spectrum information may be so-called master data related to a fluorochrome (in particular, a fluorochrome-labeled antibody) staining a sample used for acquiring the second single stain spectrum information.

By detecting a change between the first single stain spectrum information and the second single stain spectrum information in this manner, various types of processing (for example, panel design processing or unmixing processing) applying a change in the state of the fluorochrome can be performed, and deterioration of the fluorochrome can also be detected.

(Step S13)

In step S13, the information processing device 100 (in particular, the processing unit) determines whether the single stain spectrum information changes. In the determination, for example, the information processing device 100 can compare the first single stain spectrum information with the second single stain spectrum information. Then, the information processing device 100 may determine whether the single stain spectrum information changes on the basis of the comparison. For example, the information processing device 100 can compare the fluorescence intensities at wavelengths of these pieces of the single stain spectrum information.

The first single stain spectrum information and the second single stain spectrum information correspond to single stain spectrum information related to the same fluorochrome, in particular, single stain spectrum information of particles stained with the same fluorochrome-labeled antibody. The first single stain spectrum information may also be referred to as reference spectrum information. That is, in step S13, the information processing device 100 can compare the first single stain spectrum information as the reference with the second single stain spectrum information.

In a preferred embodiment, the information processing device 100 can perform the comparison on the basis of fluorescence intensities in predetermined wavelength ranges of the first single stain spectrum information and the second single stain spectrum information. In this embodiment, the predetermined wavelength ranges may be the entire wavelength range common to these two single stain spectra or a part of the wavelength range common to these two single stain spectra. The partial wavelength range may be, for example, a wavelength range covering the maximum fluorescence wavelength.

In order to perform the comparison, the information processing device 100 can acquire change amount data indicating a change between the first single stain spectrum information and the second single stain spectrum information. Change amount data of fluorescence intensity at each wavelength may be acquired. The change amount data may be, for example, error data or calculation data (for example, difference data or quotient data of two pieces of spectrum information, or calculation result data based on any one of the difference data and the quotient data) of fluorescence intensity at each wavelength in these two pieces of single stain spectrum information.

In a case where the change amount data is equal to or more than a predetermined threshold value, or more than the predetermined threshold value, the information processing device 100 may determine that the single stain spectrum information changes.

In a case where the change amount data is less than a predetermined threshold value, or equal to or less than the predetermined threshold value, the information processing device 100 may determine that the single stain spectrum information does not change.

The threshold value may be appropriately set according to the type of fluorochrome. Furthermore, the threshold value may be appropriately changed according to, for example, the number of fluorochromes included in the panel created in the panel design processing.

As described above, the information processing device 100 (in particular, the processing unit) may be configured to acquire change amount data indicating a change between the first single stain spectrum information and the second single stain spectrum information in the fluorochrome, and then determine whether the single stain spectrum information changes on the basis of the comparison based on the change amount data.

The change amount data may be, for example, change amount data based on a difference between "fluores-

7

cence intensity at a certain wavelength in the first single stain spectrum information" and "fluorescence intensity at the certain wavelength in the second single stain spectrum information". The change amount data based on the difference may be expressed by, for example, Equation 1 or Equation 2 below, but is not limited thereto. The change amount data may be expressed as an absolute value.

(Change amount data) = (Fluorescence intensity at certain wavelength in first single stain spectrum information) - (Fluorescence intensity at certain wavelength in second single stain spectrum information)/(Fluorescence intensity at certain wavelength in first single stain spectrum information), (Equation 1)

(Change amount data) = (Fluorescence intensity at certain wavelength in first single stain spectrum information) - (Fluorescence intensity at certain wavelength in second single stain spectrum information)/(Fluorescence intensity at certain wavelength in first single stain spectrum information) $\times$ 100 (unit: %) (Equation 2)

In the case of Equation 1, the threshold value may be, for example, any value between 0.01 and 0.2, and in particular, may be any value between 0.02 and 0.15. The threshold value is, for example, 0.02, 0.03, 0.04, 0.05, 0.06, 0.07, 0.08, 0.09, 0.10, 0.11, 0.12, 0.13, 0.14, or 0.15, but is not limited thereto.

In the case of Equation 2, the threshold value may be, for example, any value between 1% and 20%, and particularly, may be any value between 2% and 15%. The threshold is, for example, 2%, 3%, 4%, 5%, 6%, 7%, 8%, 9%, 10%, 11%, 12%, 13%, 14%, or 15%, but not limited to thereto.

For the comparison, the single stain spectrum information may be represented as fluorescence spectrum plot data (or graph data) in which a horizontal axis indicates a detector channel number and a vertical axis indicates fluorescence intensity. A schematic example of the graph data is illustrated in Fig. 3. In Fig. 3, the vertical axis indicates the fluorescence intensity, but is an arbitrary unit, and the horizontal axis indicates the channel number of the detector. In Fig. 3, 1st indicates first single stain spectrum information, and 2nd represents second single stain spectrum information. Thus, the single stain spectrum information may be visually represented by plotting the fluorescence intensity at each channel number. Furthermore, as described above, the change amount data can be acquired from the fluorescence intensity at each wavelength of these two pieces of single stain spectrum information.

In an embodiment, in the predetermined wavelength range, in a case where there are one or more wavelengths at which change amount data is equal to or more than a predetermined threshold value, or more than the predetermined threshold value, the information processing device 100 may determine that the single stain spectrum information changes.

Furthermore, in the predetermined wavelength range, in a case where there is not the wavelength at which the change amount data is equal to or more than a predetermined threshold value, or more than the predetermined threshold value, the information processing device 100 may determine that the single stain spectrum information does not change.

In another embodiment, in a case where an average value (for example, a simple average value or the like) of the change amount data in the predetermined wavelength range is equal to or more than a predetermined threshold value, or more than the predetermined threshold value, the information processing device 100 may determine that the single stain spectrum information changes.

Furthermore, in a case where the average value of the change amount data in the predetermined wavelength range is less than a predetermined threshold value, or equal to or less than the predetermined threshold value, the information processing device 100 may determine that the single stain spectrum information does not change.

In a case where it is determined in step S13 that the single stain spectrum information changes, the information processing device 100 advances the processing to step S14. Furthermore, in a case where it is determined that the single stain spectrum information does not change, the information processing device 100 advances the processing to step S17.

(Step S14)

In step S14, the information processing device 100 (in particular, the processing unit) generates information regarding a change in single stain spectrum information. In step S14, the information processing device 100 outputs the information regarding the change. For example, the information processing device 100 may cause the display device to display a screen including the information regarding the change.

The information regarding the change may include, for example, alert information indicating that the single stain spectrum information changes. The information processing device 100 can cause the display device to display an alert display on the basis of the alert information.

Furthermore, the information regarding the change may include, for example, information for specifying a fluorochrome or a fluorochrome-labeled antibody for which the single stain spectrum information changes. The information processing device 100 can cause the display device to display the fluorochrome or the fluorochrome-labeled antibody for which the single stain spectrum information changes, on the basis of the specifying information.

Furthermore, the information regarding the change may include, for example, single stain spectrum graph data of the fluorochrome or the fluorochrome-labeled antibody for which the single stain spectrum information changes. The information processing device 100 can cause the display device to display a single stain spectrum graph of the fluorochrome or the fluorochrome-labeled antibody for which the single stain spectrum information changes, on the basis of the graph data.

As described above, the information processing device 100 may be configured to generate the information regarding the change when it is determined that the single stain spectrum information changes.

Fig. 4A illustrates an example of a screen including the information regarding the change. In Fig. 4A, "There is a possibility that the states of dyes below change or deteriorate." is displayed as the alert. Furthermore, as illustrated in Fig. 4A, the screen may display the dye for which it is determined that the single stain spectrum information changes. In Fig. 4A, it is illustrated that there is a possibility that the states of two dyes "FITC" and "PerCP-Cy5.5" change or deteriorate.

Furthermore, the screen including the information regarding the change may have a display that prompts the user to select whether to update the single stain spectrum information. In Fig. 4A, "Please press an update button in a case of updating spectrum data." is displayed, but the content to be displayed is not limited thereto. Furthermore, in Fig. 4A, an update button 201 for updating the single stain spectrum information is displayed. Furthermore, in Fig. 4A, a close button 202 for ending the processing without updating is also displayed.

As described above, the information processing device 100 can output the screen including a display prompting the user to select whether to update the single stain spectrum information (in particular, it can be displayed on the display device). As described above, the display may be displayed on the screen including the information regarding the change, or may be displayed on another screen.

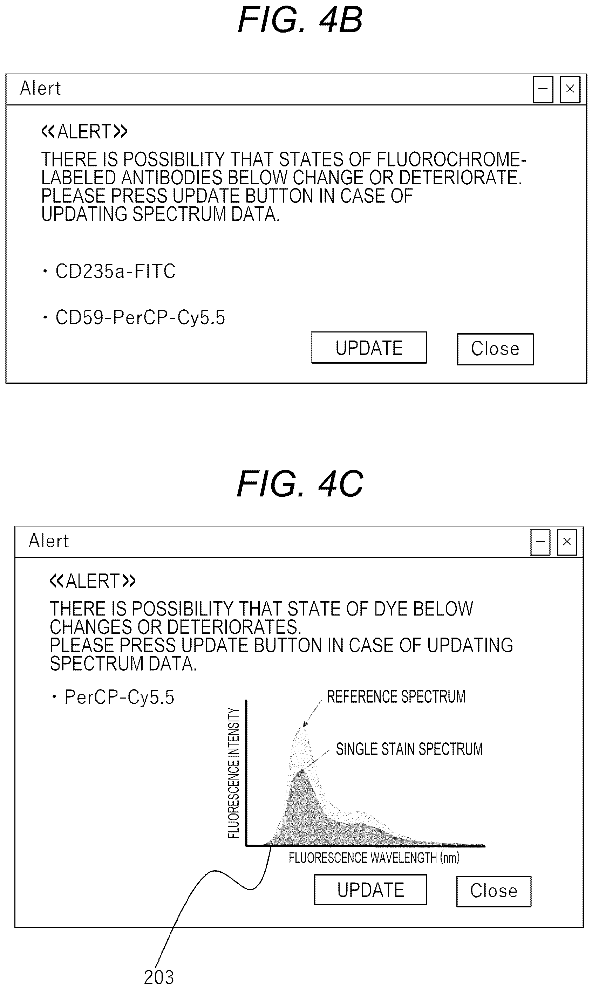

Fig. 4B illustrates another example of a screen including the information regarding the change. As illustrated in Fig. 4B, a combination of a capture target molecule of the antibody constituting the fluorochrome-labeled antibody and the fluorochrome may be displayed on the screen. In Fig. 4B, a combination of a surface marker "CD235a", which is a capture target molecule of the antibody constituting the fluorochrome-labeled antibody, and a dye "FICT" is displayed as a fluorochrome-labeled antibody for which the single stain information spectrum changes. Furthermore, a combination of a surface marker "CD59" and a dye "PerCP-Cy5.5" is also displayed as a fluorochrome-labeled antibody for which the single stain information spectrum changes or deteriorates.

Fig. 4C illustrates still another example of a screen including the information regarding the change. As illustrated in Fig. 4C, graph data of a single stain spectrum of a fluorochrome may be displayed on the screen. In Fig. 4C, a fluorochrome-labeled antibody "PerCP-Cy 5.5" for which a change in single stain spectrum is detected and a single stain spectrum data graph 203 thereof are displayed. In the graph data, a "reference spectrum" corresponding to the first single stain spectrum information and a "single stain spectrum" corresponding to the second single stain spectrum information are displayed. These two pieces of single stain spectrum information may be displayed in a superimposed manner in one piece of graph data as illustrated in Fig. 4C. Thus, it is easy to grasp a change in spectrum information. In Fig. 4C, the graph data is a graph in which the vertical axis indicates fluorescence intensity and the horizontal axis indicates a fluorescence wavelength, but the setting of the axis is not limited thereto, and may be appropriately selected by those skilled in the art. Furthermore, the form of the graph is not limited to a spectrum waveform graph as illustrated in Fig. 4C, and may be a graph having another form.

(Step S15)

In step S15, the information processing device 100 determines whether an instruction of changing the single stain spectrum information is received. The determination may be made depending on whether the update button 201 in Fig. 4C is pressed.

When the update button 201 is selected in Fig. 4C, the information processing device 100 advances the processing to step S16.

When the close button 202 is selected in Fig. 4C, the information processing device 100 advances the processing to step S17.

(Step S16)

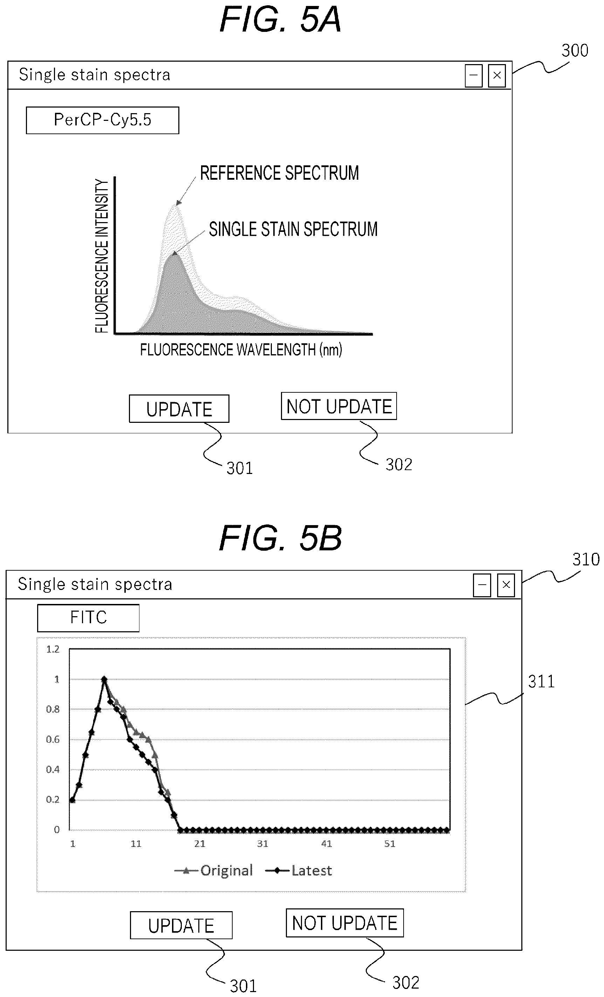

In step S16, the information processing device 100 can cause the display device to display a screen prompting update of the single stain spectrum information. An example of the screen is illustrated in Fig. 5A. As illustrated in Fig. 5A, the information processing device 100 can display the graph data on the screen. Thus, it is easy for the user to consider whether to update the single stain spectrum information. The graph data has been described above with reference to Fig. 4C, but the type of graph data is not limited thereto.

In Fig. 5A, in a case of updating the single stain spectrum information of PerCP-Cy5.5, the user selects an "update" button 301. In a case of not updating, a "not-update" button 302 is selected.

When the button 301 is selected, the information processing device 100 changes the single stain spectrum information of PerCP-Cy5.5 to the latest one.

When the button 302 is selected, the information processing device 100 maintains the single stain spectrum information of PerCP-Cy5.5 as it is.

Furthermore, in a case where there is another fluorochrome that the user is to select whether to update, a screen related to the fluorochrome can be displayed. Alternatively, in one screen, the user may be asked whether or not it is necessary to update all the fluorochromes the user is to select whether to update.

When the similar processing is completed for all the fluorochromes displayed as targets of the alert, the information processing device 100 advances the processing to step S17.

Another example of the screen displayed in step S16 will be described with reference to Fig. 5B. As illustrated in Fig. 5B, the information processing device 100 can display, for example, original single stain spectrum information (Original, first single stain spectrum information) and latest single stain spectrum information (Latest, second single stain spectrum information) on a screen 310. In Fig. 5B, these two spectra are illustrated in a superimposed manner in one graph 311. In the graph, the vertical axis indicates the fluorescence intensity expressed in an arbitrary unit, and the horizontal axis indicates the channel number of the detector that detects fluorescence. As described above, the number of each detector may be adopted as the axis.

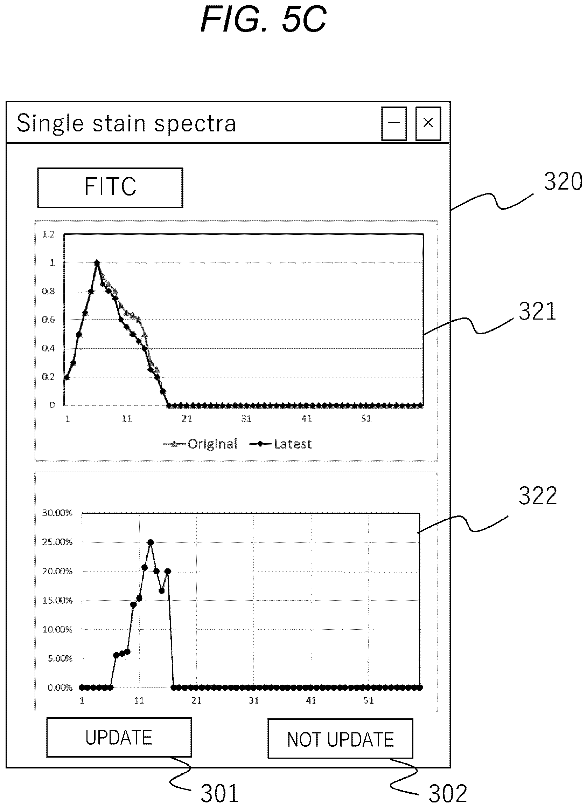

Still another example of the screen displayed in step S16 will be described with reference to Fig. 5C. A screen 320 illustrated in Fig. 5C may include, for example, a graph 321 in which the original single stain spectrum information and the latest single stain spectrum information are displayed in a superimposed manner and a graph 322 indicating the above-described change amount data. For example, the graph indicating the change amount data may be a graph in which the vertical axis indicates the change amount and the horizontal axis indicates the channel number of the fluorescence detector, but is not limited thereto.

Note that the screen includes the graph indicating the change amount data, but may not include the graph indicating the single stain spectrum.

(Step S17)

In step S17, the information processing device 100 ends processing of detecting a change in single stain spectrum information. After the completion of the step, the information processing device 100 may execute, for example, panel design processing or unmixing processing. In these processing, the single stain spectrum updated in the processing of detecting the change is used.

(4) Configuration Example of Biological Sample Analyzer

A configuration example of the biological sample analyzer used for acquiring the single stain spectrum information will be described below. Furthermore, the biological sample analyzer may execute the unmixing processing using the single stain spectrum information updated according to the present disclosure.

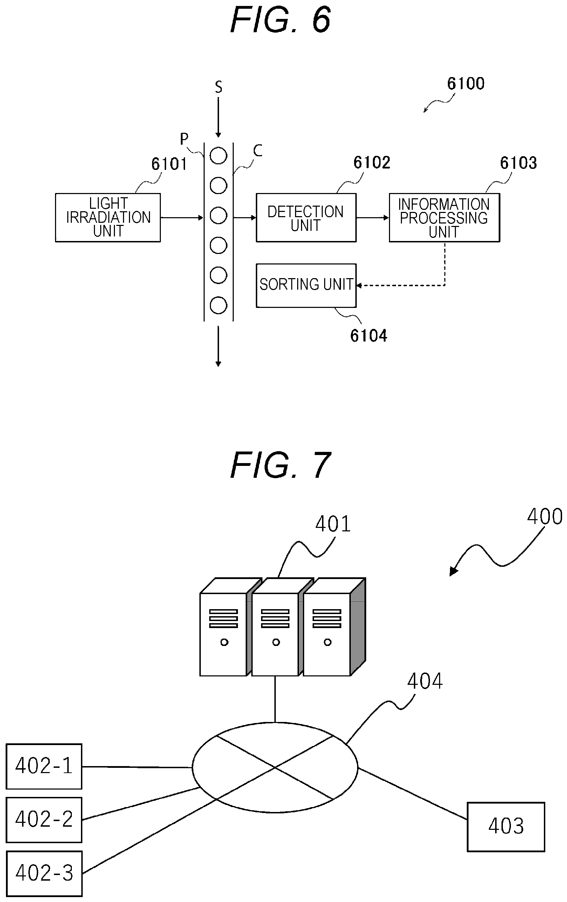

A configuration example of the biological sample analyzer is illustrated in Fig. 6. A biological sample analyzer 6100 illustrated in Fig. 6 includes: a light irradiation unit 6101 that irradiates a biological sample S flowing in a flow channel C with light; a detection unit 6102 that detects light generated by irradiating the biological sample S with light; and an information processing unit 6103 that processes information regarding the light detected by the detection unit. The biological sample analyzer 6100 is a flow cytometer or an imaging cytometer, for example. The biological sample analyzer 6100 may include a sorting unit 6104 that sorts out specific biological particles P in a biological sample. The biological sample analyzer 6100 including the sorting unit is a cell sorter, for example.

(Biological Sample)

The biological sample S may be a liquid sample containing biological particles. The biological particles are cells or non-cellular biological particles, for example. The cells may be living cells, and more specific examples thereof include blood cells such as erythrocytes and leukocytes, and germ cells such as sperms and fertilized eggs. Also, the cells may be those directly collected from a sample such as whole blood, or may be cultured cells obtained after culturing. The non-cellular biological particles are extracellular vesicles, or particularly, exosomes and microvesicles, for example. The biological particles may be labeled with one or more labeling substances (such as a dye (particularly, a fluorochrome) and a fluorochrome-labeled antibody). Note that particles other than biological particles may be analyzed by the biological sample analyzer of the present disclosure, and beads or the like may be analyzed for calibration or the like.

(Flow Channel)

The flow channel C is designed so that a flow of the biological sample S is formed. In particular, the flow channel C may be designed so that a flow in which the biological particles contained in the biological sample are aligned substantially in one row is formed. The flow channel structure including the flow channel C may be designed so that a laminar flow is formed. In particular, the flow channel structure is designed so that a laminar flow in which the flow of the biological sample (a sample flow) is surrounded by the flow of a sheath liquid is formed. The design of the flow channel structure may be appropriately selected by a person skilled in the art, or a known one may be adopted. The flow channel C may be formed in a flow channel structure such as a microchip (a chip having a flow channel on the order of micrometers) or a flow cell. The width of the flow channel C is 1 mm or smaller, or particularly, may be not smaller than 10 $\mu$m and not greater than 1 mm. The flow channel C and the flow channel structure including the flow channel C may be made of a material such as plastic or glass.

The biological sample analyzer of the present disclosure is designed so that the biological sample flowing in the flow channel C, or particularly, the biological particles in the biological sample are irradiated with light from the light irradiation unit 6101. The biological sample analyzer of the present disclosure may be designed so that the irradiation point of light on the biological sample is located in the flow channel structure in which the flow channel C is formed, or may be designed so that the irradiation point is located outside the flow channel structure. An example of the former case may be a configuration in which the light is emitted onto the flow channel C in a microchip or a flow cell. In the latter case, the biological particles after exiting the flow channel structure (particularly, the nozzle portion thereof) may be irradiated with the light, and a flow cytometer of a jet-in-air type can be adopted, for example.

(Light Irradiation Unit)

The light irradiation unit 6101 includes a light source unit that emits light, and a light guide optical system that guides the light to the irradiation point. The light source unit includes one or more light sources. The type of the light source(s) is a laser light source or an LED, for example. The wavelength of light to be emitted from each light source may be any wavelength of ultraviolet light, visible light, and infrared light. The light guide optical system includes optical components such as beam splitters, mirrors, or optical fibers, for example. The light guide optical system may also include a lens group for condensing light, and includes an objective lens, for example. There may be one or more irradiation points at which the biological sample and light intersect. The light irradiation unit 6101 may be designed to collect light emitted onto one irradiation point from one light source or different light sources.

(Detection Unit)

The detection unit 6102 includes at least one photodetector that detects light generated by emitting light onto biological particles. The light to be detected may be fluorescence or scattered light (such as one or more of the following: forward scattered light, backscattered light, and side scattered light), for example. Each photodetector includes one or more light receiving elements, and has a light receiving element array, for example. Each photodetector may include one or more photomultiplier tubes (PMTs) and/or photodiodes such as APDs and MPPCs, as the light receiving elements. The photodetector includes a PMT array in which a plurality of PMTs is arranged in a one-dimensional direction, for example. The detection unit 6102 may also include an image sensor such as a CCD or a CMOS. With the image sensor, the detection unit 6102 can acquire an image (such as a bright-field image, a dark-field image, or a fluorescent image, for example) of biological particles.

The detection unit 6102 includes a detection optical system that causes light of a predetermined detection wavelength to reach the corresponding photodetector. The detection optical system includes a spectroscopic unit such as a prism or a diffraction grating, or a wavelength separation unit such as a dichroic mirror or an optical filter. The detection optical system is designed to disperse the light generated by light irradiation to biological particles, for example, and detect the dispersed light with a larger number of photodetectors than the number of fluorochromes with which the biological particles are labeled. A flow cytometer including such a detection optical system is called a spectral flow cytometer. Further, the detection optical system is designed to separate the light corresponding to the fluorescence wavelength band of a specific fluorochrome from the light generated by the light irradiation to the biological particles, for example, and cause the corresponding photodetector to detect the separated light.

The detection unit 6102 may also include a signal processing unit that converts an electrical signal obtained by a photodetector into a digital signal. The signal processing unit may include an A/D converter as a device that performs the conversion. The digital signal obtained by the conversion performed by the signal processing unit can be transmitted to the information processing unit 6103. The digital signal can be handled as data related to light (hereinafter, also referred to as "light data") by the information processing unit 6103. The light data may be light data including fluorescence data, for example. More specifically, the light data may be data of light intensity, and the light intensity may be light intensity data of light including fluorescence (the light intensity data may include feature quantities such as area, height, and width).

(Information Processing Unit)

The information processing unit 6103 includes a processing unit that performs processing of various kinds of data (light data, for example), and a storage unit that stores various kinds of data, for example. In a case where the processing unit acquires the light data corresponding to a fluorochrome from the detection unit 6102, the processing unit can perform fluorescence leakage correction (a compensation process) on the light intensity data. In the case of a spectral flow cytometer, the processing unit also performs a fluorescence separation processing on the light data, and acquires the light intensity data corresponding to the fluorochrome. The fluorescence separation processing may be performed by an unmixing method disclosed in JP 2011-232259 A, for example. In a case where the detection unit 6102 includes an image sensor, the processing unit may acquire morphological information regarding the biological particles, on the basis of an image acquired by the image sensor. The storage unit may be designed to be capable of storing the acquired light data. The storage unit may be designed to be capable of further storing spectral reference data to be used in the unmixing process.

In a case where the biological sample analyzer 6100 includes the sorting unit 6104 described later, the information processing unit 6103 can determine whether to sort the biological particles, on the basis of the light data and/or the morphological information. The information processing unit 6103 then controls the sorting unit 6104 on the basis of the result of the determination, and the biological particles can be sorted by the sorting unit 6104.

The information processing unit 6103 may be designed to be capable of outputting various kinds of data (such as light data and images, for example). For example, the information processing unit 6103 can output various kinds of data (such as a two-dimensional plot or a spectrum plot, for example) generated on the basis of the light data. The information processing unit 6103 may also be designed to be capable of accepting inputs of various kinds of data, and accepts a gating processing on a plot by a user, for example. The information processing unit 6103 may include an output unit (such as a display, for example) or an input unit (such as a keyboard, for example) for performing the output or the input.

The information processing unit 6103 may be designed as a general-purpose computer, and may be designed as an information processing device that includes a CPU, a RAM, and a ROM, for example. The information processing unit 6103 may be included in the housing in which the light irradiation unit 6101 and the detection unit 6102 are included, or may be located outside the housing. Further, the various processes or functions to be executed by the information processing unit 6103 may be realized by a server computer or a cloud connected via a network.

(Sorting Unit)

The sorting unit 6104 performs sorting of biological particles, in accordance with the result of determination performed by the information processing unit 6103. The sorting method may be a method by which droplets containing biological particles are generated by vibration, electric charges are applied to the droplets to be sorted, and the traveling direction of the droplets is controlled by an electrode. The sorting method may be a method for sorting by controlling the traveling direction of biological particles in the flow channel structure. The flow channel structure has a control mechanism based on pressure (injection or suction) or electric charge, for example. An example of the flow channel structure may be a chip (the chip disclosed in JP 2020-76736 A, for example) that has a flow channel structure in which the flow channel C branches into a recovery flow channel and a waste liquid flow channel on the downstream side, and specific biological particles are collected in the recovery flow channel.

The information processing device according to the present disclosure may execute the above-described processing of detecting a change by using the single stain spectrum information acquired by the analysis processing by the biological sample analyzer described above.

Furthermore, the biological sample analyzer described above may be configured as the information processing device according to the present disclosure. For example, the information processing unit 6103 may function as the processing unit 101 according to the present disclosure, and may be configured to execute the processing described above.

(5) Example of Processing Using Single Stain Spectrum Information

In an embodiment, the information processing device according to the present disclosure can execute the single stain spectrum information change detection processing described above, and can then execute the panel design processing by using the single stain spectrum information updated by the processing. Since the updated single stain spectrum information is used in the panel design processing, a better combination of fluorescent reagents is proposed.

The panel design processing may include processing of generating information regarding a correlation between two pieces of single stain spectrum information of two different fluorochromes (or fluorochrome-labeled antibodies). The information regarding the correlation is, for example, a correlation coefficient between the single stain spectra or a square value of the correlation coefficient. The correlation coefficient may be, for example, a Pearson correlation coefficient, a Spearman correlation coefficient, or a Kendall correlation coefficient. The square value of the correlation coefficient can be used as an index of the degree of similarity between the two spectra, and the smaller the square value is, the less similar two single stain spectra are. Therefore, the information processing device can calculate the square value of the correlation coefficient by using the single stain spectrum information updated as described above, and can specify a combination of fluorochromes by using the calculated square value as an index. The specifying processing can be executed such that the square value calculated for two fluorochromes included in the combination becomes smaller.

For example, the Pearson correlation coefficient can be calculated between two of fluorescence spectra X and Y as below.

First, for example, the fluorescence spectra X and Y can be expressed as below.

Fluorescence spectrum X = $(X_1, X_2,..., X_{320})$, mean = $\mu_x$, standard deviation = $\sigma_x$ (where $X_1$ to $X_{320}$ are fluorescence intensities at 320 different wavelengths, the mean $\mu_x$ is a mean of these fluorescence intensities, and the standard deviation $\sigma_x$ is a standard deviation of these fluorescence intensities)

Fluorescence spectrum Y = $(Y_1, Y_2,..., Y_{320})$, mean = $\mu_y$, standard deviation = $\sigma_y$ (where $Y_1$ to $Y_{320}$ are fluorescence intensities at 320 different wavelengths, the mean $\mu_y$ is a mean of these fluorescence intensities, the standard deviation $\sigma_x$ is a standard deviation of these fluorescence intensities)

Note that the numerical value "320" is a value set for convenience of description, and the numerical value used in the calculation of the correlation coefficient is not limited thereto. The numerical value may be appropriately changed according to the configuration of the fluorescence detector, for example, the number of PMTs (photomultiplier tubes) used for fluorescence detection and the like.

The Pearson correlation coefficient R between the fluorescence spectra X and Y is obtained by Equation 1 below.

[Math. 1]

$$R = \frac{\sum Z_{Xn} Z_{Yn}}{N}$$

In Equation of Math. 1, $Z_{Xn}$ (n is 1 to 320) is a standardized fluorescence intensity and is expressed as below.

$$Zx1 = (X_1 - \mu_x) \div \sigma_x, \; Zx2 = (X_2 - \mu_x) \div \sigma_x, \; ...Zx320 = (X_{320} - \mu_x) \div \sigma_x$$

Similarly, $Z_{Yn}$ (n is one to 320) is also expressed as below.

$Zy1 = (Y_1 - \mu_y) \div \sigma_y, Zy2 = (Y_2 - \mu_y) \div \sigma_y, ... Zy320 = (Y_{320} - \mu_y) \div \sigma_y$

Furthermore, in Equation of Math. 1, N is the number of data.

In another embodiment, the information processing device according to the present disclosure can execute the single stain spectrum information change detection processing described above, and can then execute fluorescence correction processing (in particular, the unmixing processing) by using the single stain spectrum information updated by the processing. In the fluorescence correction processing, more accurate fluorescence correction can be performed by using the updated single stain spectrum information.

2. Second Embodiment (Information Processing System)

The present disclosure also provides an information processing system including the processing unit described in "1. First Embodiment (Information Processing Device)". In addition to the processing unit, the information processing system may include the storage unit, the input unit, the output unit, and the communication unit, which are described above in "1. First Embodiment (Information Processing Device)". These components may be provided in one device or may be provided in a plurality of devices in a distributed manner.

In the information processing system according to the present disclosure, the processing related to the single stain spectrum information described in "1. First Embodiment (Information Processing Device)" may be executed.

A configuration example of the information processing system according to the present disclosure will be described with reference to Fig. 7. An information processing system 400 illustrated in Fig. 7 includes an information processing device 401, terminals 402-1 to 402-3, and a biological sample analyzer 403. These devices included in the information processing system 400 may be connected via a network 404.

The information processing device 401 may be configured as described in "1. First Embodiment (Information Processing Device)". The information processing device 401 may be configured by, for example, a server computer. The information processing device 401 may be configured to collect single stain spectrum information acquired in the analysis processing by the biological sample analyzer 403.

The biological sample analyzer 403 may be configured as described in "1. First Embodiment (Information Processing Device)", and may be, for example, a flow cytometer. The biological sample analyzer 403 may be a closed cell sorter. The biological sample analyzer may execute analysis processing using the fluorochrome.

The number of biological sample analyzers that can be connected to the information processing system 400 is not limited to one as illustrated in Fig. 7, and for example, may be one or plural. For example, the biological sample analyzer 403 may be configured to transmit the single stain spectrum of each fluorochrome (or each fluorochrome-labeled antibody) to the information processing device 401 or the terminals 402-1 to 402-3 when the device executes the analysis processing, and the transmission may be automatically performed.

The terminals 402-1 to 402-3 are devices operated by users who execute information processing according to the present disclosure, and each of the terminals may be configured as an information processing device. The information processing device may be configured as described in "1. First Embodiment (Information Processing Device)", and may be a desktop terminal, a laptop terminal, or a tablet terminal.

The number of terminals is not limited to three illustrated in Fig. 7, and may be, for example, one or plural.

In an embodiment, the information processing device 401 can execute the single stain spectrum change detection processing described in "1. First Embodiment (Information Processing Device)", and any of the terminals 402-1 to 402-3 can display various screens generated in accordance with the processing.

In another embodiment, any of the terminals 402-1 to 402-3 may execute the single stain spectrum change detection processing described in "1. First Embodiment (Information Processing Device)", and further may display various screens generated in accordance with the processing.

3. Third Embodiment (Information Processing Method)

The present disclosure relates to an information processing method. The information processing method may include processing of detecting a change in single stain spectrum information of a fluorochrome. The processing may be executed as described in 1. above, and in particular, may be executed as described in (3) of 1. above. By executing the processing, appropriate single stain spectrum information can be selected, and thus more accurate unmixing processing or panel design processing can be executed.

4. Fourth embodiment (program)

The present disclosure also provides a program for causing the information processing device to execute the information processing method described in the above-described 3. The information processing method is as described in the above-described 1. and 3., and the description also applies to the present embodiment. The program according to the present disclosure may be recorded in, for example, the recording medium described above, or may be stored in the information processing device described above or a storage unit included in the information processing device described above.

Note that the present disclosure can also have the following configurations.

(1) An information processing device including a processing unit configured to detect a change in single stain spectrum information of a fluorochrome.

(2) The information processing device according to (1), in which the processing unit compares first single stain spectrum information of the fluorochrome with second single stain spectrum information of the fluorochrome, and determines whether single stain spectrum information changes on the basis of the comparison.

(3) The information processing device according to (2), in which the first single stain spectrum information and the second single stain spectrum information correspond to single stain spectrum information related to the same fluorochrome, and are acquired at different time points.

(4) The information processing device according to any one of (1) to (3), in which the single stain spectrum information is fluorescence intensity spectrum data of fluorescence generated by irradiating the fluorochrome with light.

(5) The information processing device according to any one of (1) to (4), in which the single stain spectrum information is spectrum data represented by fluorescence intensity at each wavelength in a predetermined wavelength range.

(6) The information processing device according to (2), in which the processing unit acquires change amount data indicating a change between the first single stain spectrum information of the fluorochrome and the second single stain spectrum information of the fluorochrome, and determines whether the single stain spectrum information changes on the basis of the comparison based on the change amount data.

(7) The information processing device according to (6), in which in a case where the change amount data is equal to or more than a predetermined threshold value, or more than the predetermined threshold value, the processing unit determines that the single stain spectrum information changes.

(8) The information processing device according to (7), in which the processing unit generates information regarding the change when it is determined that the single stain spectrum information changes.

(9) The information processing device according to (8), in which the information regarding the change includes an alert indicating that the single stain spectrum information changes.

(10) The information processing device according to (8) or (9), in which the information regarding the change includes information for specifying a fluorochrome for which the single stain spectrum information changes.

(11) The information processing device according to any one of (8) to (10), in which the information regarding the change includes single stain spectrum graph data of a fluorochrome for which the single stain spectrum information changes.

(12) The information processing device according to any one of (1) to (11), in which the processing unit outputs a screen including a display prompting to select whether to update the single stain spectrum information.

(13) The information processing device according to (12), in which the processing unit is configured to execute panel design processing by using the updated single stain spectrum information.

(14) The information processing device according to (12) or (13), in which the processing unit is configured to execute unmixing processing by using the updated single stain spectrum information.

(15) An information processing system including a processing unit configured to detect a change in single stain spectrum information of a fluorochrome.

(16) The information processing system according to (15), further including

an information processing device including the processing unit, and
a biological sample analyzer.

(17) The information processing system according to (16), in which the biological sample analyzer executes analysis processing using the fluorochrome.

(18) The information processing system according to (17), in which the biological sample analyzer is configured to transmit, to the information processing device, a single stain spectrum of the fluorochrome, the single stain spectrum being obtained by the analysis processing.

REFERENCE SIGNS LIST

100     Information processing device
101     Processing unit
102     Storage unit
103     Input unit
104     Output unit
105     Communication unit

**Claims**

1. An information processing device comprising a processing unit configured to detect a change in single stain spectrum information of a fluorochrome.

2. The information processing device according to claim 1, wherein the processing unit compares first single stain spectrum information of the fluorochrome with second single stain spectrum information of the fluorochrome, and determines whether single stain spectrum information changes on a basis of the comparison.

3. The information processing device according to claim 2, wherein the first single stain spectrum information and the second single stain spectrum information correspond to single stain spectrum information related to a same fluorochrome, and are acquired at different time points.

4. The information processing device according to claim 1, wherein the single stain spectrum information is fluorescence intensity spectrum data of fluorescence generated by irradiating the fluorochrome with light.

5. The information processing device according to claim 1, wherein the single stain spectrum information is spectrum data represented by fluorescence intensity at each wavelength in a predetermined wavelength range.

6. The information processing device according to claim 2, wherein the processing unit acquires change amount data indicating a change between the first single stain spectrum information of the fluorochrome and the second single stain spectrum information of the fluorochrome, and determines whether the single stain spectrum information changes on a basis of the comparison based on the change amount data.

7. The information processing device according to claim 6, wherein in a case where the change amount data is equal to or more than a predetermined threshold value, or more than the predetermined threshold value, the processing unit determines that the single stain spectrum information changes.

8. The information processing device according to claim 7, wherein the processing unit generates information regarding the change when it is determined that the single stain spectrum information changes.

9. The information processing device according to claim 8, wherein the information regarding the change includes an alert indicating that the single stain spectrum information changes.

10. The information processing device according to claim 8, wherein the information regarding the change includes information for specifying a fluorochrome for which the single stain spectrum information changes.

11. The information processing device according to claim 8, wherein the information regarding the change includes single stain spectrum graph data of a fluorochrome for which the single stain spectrum information changes.

12. The information processing device according to claim 1, wherein the processing unit outputs a screen including a display prompting to select whether to update the single stain spectrum information.

13. The information processing device according to claim 12, wherein the processing unit is configured to execute panel design processing by using the updated single stain spectrum information.

14. The information processing device according to claim 12, wherein the processing unit is configured to execute unmixing processing by using the updated single stain spectrum information.

15. An information processing system comprising a processing unit configured to detect a change in single stain spectrum information of a fluorochrome.

16. The information processing system according to claim 15, further comprising:

   an information processing device including the processing unit; and
   a biological sample analyzer.

17. The information processing system according to claim 16, wherein the biological sample analyzer executes analysis processing using the fluorochrome.

18. The information processing system according to claim 17, wherein the biological sample analyzer is configured to transmit, to the information processing device, a single stain spectrum of the fluorochrome, the single stain spectrum being obtained by the analysis processing.

## FIG. 1

# FIG. 2

START    S 1 1

ACQUIRE SINGLE STAIN
SPECTRUM INFORMATION    S 1 2

S 1 3
DOES SINGLE
STAIN SPECTRUM INFORMATION
CHANGE?

N O

Y E S

S 1 4
GENERATE INFORMATION (ALERT)
REGARDING CHANGE
(DISPLAY SPECTRUM INFORMATION
CHANGE SCREEN)

S 1 5
IS CHANGE
INSTRUCTION RECEIVED?

N O

Y E S

S 1 6
CHANGE SINGLE STAIN SPECTRUM
INFORMATION TO BE USED

END    S 1 7

# FIG. 3

# FIG. 4A

## FIG. 4B

Alert     [−] [×]

《ALERT》

THERE IS POSSIBILITY THAT STATES OF FLUOROCHROME-
LABELED ANTIBODIES BELOW CHANGE OR DETERIORATE.
PLEASE PRESS UPDATE BUTTON IN CASE OF
UPDATING SPECTRUM DATA.

・CD235a-FITC

・CD59-PerCP-Cy5.5

[ UPDATE ]    [ Close ]

## FIG. 4C

Alert     [−] [×]

《ALERT》

THERE IS POSSIBILITY THAT STATE OF DYE BELOW
CHANGES OR DETERIORATES.
PLEASE PRESS UPDATE BUTTON IN CASE OF UPDATING
SPECTRUM DATA.

・PerCP-Cy5.5

REFERENCE SPECTRUM

SINGLE STAIN SPECTRUM

FLUORESCENCE INTENSITY

FLUORESCENCE WAVELENGTH (nm)

[ UPDATE ]    [ Close ]

203

# FIG. 5A

# FIG. 5B

# FIG. 5C

## FIG. 6

## FIG. 7

| INTERNATIONAL SEARCH REPORT | International application No. |
|---|---|
| | **PCT/JP2023/007273** |

**A.    CLASSIFICATION OF SUBJECT MATTER**

*G01N 21/64*(2006.01)i
FI:   G01N21/64 F

According to International Patent Classification (IPC) or to both national classification and IPC

**B.    FIELDS SEARCHED**

Minimum documentation searched (classification system followed by classification symbols)

G01N21/00-21/83; G01N33/48-33/98; G01N15/00-15/14

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| X | JP 2018-507405 A (LIFE TECHNOLOGIES CORP.) 15 March 2018 (2018-03-15) | 1-5, 15-18 |
| | claims 1, 12, paragraphs [0001], [0020], [0024], [0147], fig. 1, 21 | |
| A | | 6-14 |
| X | JP 2021-162393 A (SONY GROUP CORP.) 11 October 2021 (2021-10-11) | 1-5, 12, 14-18 |
| | paragraphs [0021]-[0066], fig. 1-4 | |
| Y | | 13 |
| A | | 6-11 |
| X | WO 2019/049442 A1 (SONY CORP.) 14 March 2019 (2019-03-14) | 1-5, 12, 14-18 |
| | paragraphs [0023]-[0074], fig. 1-18 | |
| Y | | 13 |
| A | | 6-11 |
| X | WO 2022/019006 A1 (SONY GROUP CORP.) 27 January 2022 (2022-01-27) | 1-5, 12-18 |
| | paragraphs [0013]-[0097], [0179]-[0203], fig. 1-5, 18, 33 | |
| Y | | 13 |

☑ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **24 April 2023** | **16 May 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**

International application No.

**PCT/JP2023/007273**

### C. DOCUMENTS CONSIDERED TO BE RELEVANT

| Category* | Citation of document, with indication, where appropriate, of the relevant passages | Relevant to claim No. |
|---|---|---|
| Y | JP 2016-517000 A (BECKMAN COULTER, INC.) 09 June 2016 (2016-06-09) paragraphs [0040], [0058], [0079], fig. 1E, 2 | 13 |
| A | | 1-12, 14-18 |
| A | JP 2011-95073 A (OLYMPUS CORP.) 12 May 2011 (2011-05-12) | 1-18 |
| A | JP 2011-247656 A (YOKOGAWA ELECTRIC CORP.) 08 December 2011 (2011-12-08) | 1-18 |
| A | JP 2002-274813 A (FUJI PHOTO FILM CO., LTD.) 25 September 2002 (2002-09-25) paragraph [0004] | 1-18 |
| A | US 2015/0247209 A1 (UNIVERSITY OF UTAH RESEARCH FOUNDATION) 03 September 2015 (2015-09-03) | 1-18 |

Form PCT/ISA/210 (second sheet) (January 2015)

**INTERNATIONAL SEARCH REPORT**
Information on patent family members

International application No.

**PCT/JP2023/007273**

| Patent document cited in search report | | | Publication date (day/month/year) | Patent family member(s) | | | Publication date (day/month/year) |
|---|---|---|---|---|---|---|---|
| JP | 2018-507405 | A | 15 March 2018 | WO | 2016/127124 | A2 | |
| | | | | claims 1, 12, paragraphs [0001], [0008], [0012], [0136], fig. 1, 12 | | | |
| | | | | WO | 2016/127032 | A1 | |
| | | | | WO | 2016/127080 | A1 | |
| | | | | WO | 2016/127082 | A1 | |
| | | | | WO | 2016/127090 | A1 | |
| | | | | EP | 3254079 | A2 | |
| | | | | EP | 3254080 | A1 | |
| | | | | EP | 3254083 | A1 | |
| | | | | EP | 3254081 | A1 | |
| | | | | EP | 3254082 | A1 | |
| | | | | US | 2016/0231246 | A1 | |
| | | | | US | 2018/0292320 | A1 | |
| | | | | US | 2016/0231245 | A1 | |
| | | | | US | 2016/0230209 | A1 | |
| | | | | US | 2016/0231250 | A1 | |
| | | | | US | 2016/0237474 | A1 | |
| | | | | US | 2018/0230511 | A1 | |
| | | | | CN | 107407632 | A | |
| | | | | CN | 107430066 | A | |
| | | | | CN | 107407631 | A | |
| | | | | CN | 107889521 | A | |
| | | | | CN | 107466365 | A | |
| | | | | KR | 10-2017-0134357 | A | |
| | | | | KR | 10-2017-0134358 | A | |
| | | | | KR | 10-2017-0134359 | A | |
| | | | | KR | 10-2017-0134360 | A | |
| | | | | KR | 10-2017-0134361 | A | |
| JP | 2021-162393 | A | 11 October 2021 | WO | 2021/200411 | A1 | |
| | | | | paragraphs [0021]-[0066], fig. 1-4 | | | |
| | | | | CN | 115335682 | A | |
| WO | 2019/049442 | A1 | 14 March 2019 | US | 2020/0182772 | A1 | |
| | | | | paragraphs [0049]-[0100], fig. 1-18 | | | |
| | | | | EP | 3680645 | A1 | |
| | | | | JP | 2022-3343 | A | |
| WO | 2022/019006 | A1 | 27 January 2022 | (Family: none) | | | |
| JP | 2016-517000 | A | 09 June 2016 | WO | 2014/144826 | A1 | |
| | | | | paragraphs [0080], [0099], [0120], [0121], fig. 1E, 2 | | | |
| | | | | US | 2020/0132594 | A1 | |
| | | | | US | 2016/0025621 | A1 | |
| | | | | EP | 2972213 | A1 | |
| | | | | EP | 3730927 | A1 | |
| | | | | CN | 105051521 | A | |
| | | | | CN | 111537426 | A | |
| JP | 2011-95073 | A | 12 May 2011 | US | 2011/0102578 | A1 | |

Form PCT/ISA/210 (patent family annex) (January 2015)

Form PCT/ISA/210 (patent family annex) (January 2015)

**INTERNATIONAL SEARCH REPORT**
Information on patent family members

International application No.

**PCT/JP2023/007273**

| Patent document cited in search report | | | Publication date (day/month/year) | Patent family member(s) | | | Publication date (day/month/year) |
|---|---|---|---|---|---|---|---|
| JP | 2011-247656 | A | 08 December 2011 | (Family: none) | | | |
| JP | 2002-274813 | A | 25 September 2002 | (Family: none) | | | |
| US | 2015/0247209 | A1 | 03 September 2015 | WO | 2014/058919 | A1 | |
| | | | | EP | 2906943 | A1 | |
| | | | | EP | 3379245 | A1 | |
| | | | | CA | 2887302 | A1 | |
| | | | | CN | 104854451 | A | |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019203842 A
- JP 2011232259 A
- JP 2011 A
- JP 232259 A
- JP 2020076736 A